# EUROPÄISCHE PATENTSCHRIFT

(11) **EP 2 512 725 B1**
(45) Veröffentlichungstag und Bekanntmachung des Hinweises auf die Patenterteilung: **21.02.2018**
(21) Anmeldenummer: 10788347.2
(22) Anmeldetag: 14.12.2010
(51) Int. Cl.: B23K 35/30, F01N 13/18, B23K 35/36, B23K 35/38, B23K 35/02

(54) **VERWENDUNG EINER CU-LEGIERUNG ZUM LÖTEN VON BAUTEILEN VON ABGASANLAGEN. 84-88 %KUPFER; 8.5-13.5%MANGAN; 1.5-4 %COBALT ODER NICKEL; 0-0.5% SILIZIUM.**
USE OF A COPPER BASED ALLOY FOR SOLDERING PARTS OF EXHAUST SYSTEMS. THE SOLDER COMPRISES 84-88 %COPPER; 8.5-13.5%MANGANESE; 1.5-4 %COBALT OR NICKEL; 0-0.5% SILICON.
UTILISATION D'UN ALLIAGE À BASE DE CUIVRE POUR BRASSAGE DE PIECES POUR ECHAPPEMENT. L'ALLIAGE CONTIENT 84-88 % CUIVRE; 8.5-13.5% MANGANESE; 1.5-4 %COBALT OU NICKEL; 0-0.5% SILICON

(30) Priorität: 19.12.2009 DE 102009059686
(43) Veröffentlichungstag der Anmeldung: 24.10.2012
(73) Patentinhaber: Umicore AG & Co. KG, 63457 Hanau-Wolfgang (DE)
(72) Erfinder: GOERTZ, Karl, 63571 Gelnhausen (DE); SCHWARZBACH, Uwe, 91522 Ansbach (DE); STROICZEK, Martin, 63486 Bruchköbel (DE)
(86) Internationale Anmeldenummer: PCT/EP2010/069601
(87) Internationale Veröffentlichungsnummer: WO 2011/073177

(56) Entgegenhaltungen:
- GB-A- 789 653
- US-A- 2 407 995
- US-A- 4 144 441

## Beschreibung

Die Erfindung betrifft ein Verfahren zum Verbinden von mindestens zwei Bauteilen einer Abgasanlage für ein Kraftfahrzeug.

### Hintergrund der Erfindung

Bekannte Kraftfahrzeuge besitzen eine Abgasanlage mit mehreren Bauteilen, wie Rohren und mindestens einem ein Gehäuse aufweisenden Katalysator und/oder Schalldämpfer. Solche Gehäuse werden oft aus mehreren Metallteilen hergestellt, die bei Verbindungsabschnitten miteinander und/oder mit Rohren und/oder sonstigen Auspuff-Bestandteilen verbunden werden. Es können auch Verbindungsabschnitte miteinander verbunden werden, die zu ein und demselben Bestandteil, etwa zu einem Mantel gehören, der aus einem zu einem Zylinder gebogenen Blechstück geformt ist.

US-A-3 093 208 zeigt Verbindungsabschnitte von Bestandteilen von Schalldämpfer- und/oder Katalysator-Gehäusen und/oder von Rohren durch Schmelzschweißen miteinander zu verbinden. Beim Schmelzschweißen wird mit einem elektrischen Lichtbogen oder mit einer Gasflamme zu den Verbindungsabschnitten gehörendes Material geschmolzen. Das Schmelzschweißen kann mit oder ohne einen zusätzlichen, an der Schweißstelle zugegebenen Werkstoff erfolgen. Solche Werkstoffe haben eine Schmelztemperatur, die meistens ähnlich der Schmelztemperaturen Materialien der Verbindungsabschnitte, d.H. gleich oder wenig größer oder kleiner als diese Schmelztemperaturen sind. Das Schmelzschweißen mit Hilfe eines elektrischen Lichtbogens oder einer Gasflamme ist jedoch nicht zum Verbinden dünner Blechteile geeignet, weil oft Löcher auftreten. Schweißspritzer und & Schweißperlen sind gefürchtet, da diese ggf. ins Abgasrohr gelangen und die Abgasanlage in kurzer Zeit im Betrieb des KFZ zerstören können. Ausserdem rekristallisiert das geschmolzene Material, wobei Kornwachstum und häufige Defekte an Korngrenzen und oxidierten Oberflächen auftreten. Die große Wärmeeinwirkung beim Schmelzschweißen bewirkt zudem starke thermische Verformungen, wodurch die verschweißten Teile entweder verformt sind oder große Spannungen aufweisen. Zudem kann das Schmelzschweissen einen negativen Einfluss auf die Korrosionsbeständigkeit bestimmter Stähle haben. Die Erzeugung von Schmelzschweißnähten nimmt relativ viel Zeit in Anspruch, was zu längeren Taktzeiten führt.

JP-A-3128166 zeigt Verfahren zum Verbinden von Verbindungsabschnitten von Stahlplatten durch Diffusionsschweißen. Die Stahlplatten werden dazu derart angeordnet, dass ihre Ränder bei den miteinander zu verbindenden Verbindungsabschnitten aneinander anliegen, mit einem Lichtbogen ein Hartlot geschmolzen und über den aneinander anliegenden Rändern auf ein Paar von miteinander fluchtenden Flächen der Platten aufgebracht. Wenn das Hartlot verfestigt ist und sich beim Abkühlen zusammenzieht, werden die Ränder der ebenfalls heißen Stahlplatten gegeneinander gepresst. Dies bewirkt eine Diffusions-Press-Schweißung, wobei die Materialien der beiden Platten ineinander hinein diffundieren, so dass die ursprünglichen Ränder der Platten mehr oder weniger verschwinden. Nach der Beendigung der Diffusionsschweißung kann das Hartlot zwar wahrscheinlich noch auf den verschweißten Platten verbleiben, hat aber eigentlich keine wesentliche Funktion mehr. Da die Ränder der Platten zur Erzeugung der Diffusionsschweißverbindung genau aneinander stoßen müssen und beim Abkühlen des Hartlots mit großem Druck gegeneinander gepresst werden, ist Diffusionsschweißen dünne Bleche mit einer Dicke von weniger als ca. 2 mm ungeeignet. Weiter ist eine hohe Paßgenauigkeit der aneinander stoßenden Ränder erforderlich. Das Diffusionsschweißen ist ebenfalls zeitaufwendig und kaum anwendbar, um zum Beispiel einen zylindrischen, im Querschnitt kreisförmigen oder ovalen Blechmantel mit einer meist ebenen oder konischen Endwand aus Blech eines Gehäuses zu verbinden, da hierzu mindestens einer der miteinander zu verbindenden, kreisförmigen oder ovalen Verbindungsabschnitte derart abgebogen oder abgewinkelt werden müsste, damit die Ränder der Verbindungsabschnitte überall ohne Spalt aneinander anliegen, was großen Aufwand erfordert. Die zu verbindenden Ränder müssen außerdem glatte und genau zueinander parallele Randflächen haben, so daß beim Schneiden einer Blechplatte erhaltene Ränder vor dem Verbinden durch Diffusionsschweißen weiter bearbeitet werden müssen. Diffusionsschweißen mit Hilfe eines sich beim Abkühlen zusammenziehenden Hartlots ist nur dann möglich, wenn der thermische Längenausdehnungskoeffizient des Hartlots größer ist als der Materialien der Verbindungsabschnitte. Bei einem Hartlot auf Kupferbasis für Verbindungsabschnitte aus austenitischem Stahl oder Aluminium ist dies nicht der Fall. Hartlot und Verbindungsabschnitte werden beim bekannten Diffusionsschweißen auf ca. 1500°C erwärmt, d.h. fast bis zur Schmelztemperatur von Stählen erhitzt, so dass bei diesem Diffusionsschweißen wie bei dem vorher beschriebenen Schmelzschweißen eine Umkristallisierung und Kornvergrößerung des Materials der Verbindungsabschnitte stattfindet, was die Materialeigenschaften verschlechtert.

JP-A-63-010065 zeigt bekannte Verbindungsverfahren von zwei wahrscheinlich nicht für eine Abgasanlage bestimmten Teilen, von denen mindestens einer aus gesintertem, metallischem Material besteht. Die beiden Teile sind plattenförmig, bilden miteinander einen rechten Winkel und begrenzen bei der Verbindungsstelle zusammen eine Nut. Zum Verbinden wird mit einer Kupferelektrode ein mit Argongas abgeschirmter Lichtbogen erzeugt, wobei Kupfer von der Elektrode abschmilzt und in die Nut fliesst und die beiden Teile miteinander verbindet. Die miteinander verbundenen Teile haben Dicken, die gemäss der Zeichnung ein Vielfaches vom Durchmesser der Kupferelektrode betragen und also wahrscheinlich mindestens einige Millimeter betragen. GB 789 653 zeigt die Verwendung einer Cu-Legierung bestehend aus 6 Gew.-% bis 30 Gew.-% Mangan; 0 bis 10 Gew.-% Ni und 0,05 Gew.-% bis 0,5 Gew.-% Silizium zum Löten von Bauteilen von Abgasanlagen.

### Aufgabe der Erfindung

Es ist die Aufgabe der vorliegenden Erfindung, ein Verfahren zum Verbinden von Bauteilen von Abgasanlagen bereitzustellen, welches die Nachteile der bekannten Verfahren vermeidet und insbesondere auch dünne Metallbauteile schnell, rationell und kostengünstig miteinander verbindet, wobei die Eigenschaften der Bauteile beim Verbindungsvorgang wenig beeinträchtigt und nur geringe Spannungen erzeugt werden sollen. Die gebildeten Verbindungen müssen ausreichend dicht, hitze- und vibrationsfest sein, um den beim Betrieb der Abgasanlage auftretenden Beanspruchungen dauerhaft Stand zu halten und gasdichte Verbindungen zu ermöglichen.

### Kurze Beschreibung der Erfindung

Die Aufgabe wird gelöst durch die
1. Verwendung einer Legierung (Lotlegierung) zum Löten von Bauteilen von Abgasanlagen bestehend aus
   - 84 Gew.-% bis 88 Gew.-% Kupfer;
   - 8,5 Gew.-% bis 13,5 Gew.-% Mangan;
   - 1,5 Gew.-% bis 4 Gew.-% eines Übergangsmetalles ausgewählt aus der Gruppe bestehend aus Cobalt, Nickel und deren Mischungen;
   - 0 Gew.-% bis 0,5 Gew.-% Silizium, wobei sich die Summe der Legierungsbestandteile zu 100 Gew.-% ergänzen sowie unvermeidbaren Verunreinigungen.
2. Verwendung nach Punkt 1, wobei das Löten durch Widerstandslöten, Laserlöten, Lichtbogenlöten oder Induktionslöten erfolgt.
3. Verwendung einer Legierung nach Punkt 1 oder 2, wobei die Summe der Verunreinigungen in einer Menge von weniger als 0,15 Gew.-% vorhanden sind.
4. Verwendung einer Legierung nach einem der vorstehenden Punkte, wobei die Legierung 0,1 Gew.-% bis 0,25 Gew.-% Silizium enthält.
5. Verwendung einer Legierung nach einem der vorstehenden Punkte, wobei die Legierung eine Scherfestigkeit von mehr als 200 MPa, insbesondere mehr als 300 MPa, bestimmt nach DIN EN 12797, aufweist.
6. Verwendung einer Legierung nach einem der vorstehenden Punkte, wobei die Zeitstandsfestigkeit der Legierung bei einer Versuchsdauer von 1000 Stunden bei 300°C mindestens 60% der Zugfestigkeit bei 20°C beträgt.
7. Verwendung einer Legierung nach einem der vorstehenden Punkte, wobei die Liquidustemperatur der Legierung zwischen 950°C und 1050°C beträgt.
8. Verwendung einer Legierung nach einem der vorstehenden Punkte, wobei die Legierung bei 20°C und bei 100°C einen spezifischen elektrischen Widerstand von 43 µOhm * cm mit einer Toleranz von +- 10%, insbesondere +-5% aufweist.
9. Verwendung einer Legierung nach einem der vorstehenden Punkte, wobei mindestens eines der Bauteile der Abgasanlage ein Rohr ist.
10. Verwendung einer Legierung nach einem der vorstehenden Punkte, wobei zwischen den durch Löten zu verbindenden Bauteilen eine umlaufende Spaltweite von 0,05 bis 0,2 mm vorliegt.
11. Verwendung einer Legierung nach einem der vorstehenden Punkte, wobei die Bauteile der Abgasanlagen aus einem Werkstoff bestehen, der ausgewählt ist aus Chromstahl, Nickelstahl, Edelstahl, nichtrostender Stahl, V2A-Stahl und deren Kombinationen.
12. Verwendung einer Legierung nach einem der vorstehenden Punkte, wobei die Bauteile der Abgasanlagen Wanddicken von kleiner als 1,6 mm, insbesondere kleiner als 1 mm aufweisen.
13. Abgasanlage mit einem ersten Bauteil und einem zweiten Bauteil, dadurch gekennzeichnet, dass zwischen den beiden Bauteilen eine Lötstelle vorhanden ist, die aus einer Legierung der folgenden Zusammensetzung besteht:
   - 84 Gew.-% bis 88 Gew.-% Kupfer;
   - 8,5 Gew.-% bis 13,5 Gew.-% Mangan;
   - 1,5 Gew.-% bis 4 Gew.-% eines Übergangsmetalles ausgewählt aus der Gruppe bestehend aus Cobalt, Nickel und deren Mischungen;
   - 0 Gew.-% bis 0,5 Gew.-% Silizium, wobei sich die Summe der Legierungsbestandteile zu 100 Gew.-% ergänzen sowie unvermeidbaren Verunreinigungen.
14. Verfahren zum Verbinden von Bauteilen einer Abgasanlage mit den Schritten
   - Bereitstellen eines ersten Bauteils;
   - Bereitstellen eines zweiten Bauteils;
   - Versehen von mindestens einem Bauteil mit einer Lötlegierung;
   - Erwärmen der Lotstelle auf eine Temperatur, welche oberhalb der Liquidustemperatur der Lötlegierung, aber unterhalb der Solidustemperatur des ersten und zweiten Bauteils liegt, wobei
   die Lötlegierung eine Legierung der folgenden Zusammensetzung ist:
   - 84 Gew.-% bis 88 Gew.-% Kupfer;
   - 8,5 Gew.-% bis 13,5 Gew.-% Mangan;
   - 1,5 Gew.-% bis 4 Gew.-% eines Übergangsmetalles ausgewählt aus der Gruppe bestehend aus Cobalt, Nickel und deren Mischungen;
   - 0 Gew.-% bis 0,5 Gew.-% Silizium,
   wobei sich die Summe der Legierungsbestandteile zu 100 Gew.-% ergänzen, sowie unvermeidbaren Verunreinigungen.

### Detaillierte Beschreibung der Erfindung

Die Legierung enthält vorteilhaft nur eines der Übergangsmetalle Nickel oder Kobalt als Legierungsbestandteil. Ganz besonders vorteilhaft sind Legierungen, welche 85,5 Gew.-% bis 87,5 Gew.-%, insbesondere 86 Gew.-% bis 87 Gew.-% Kupfer enthalten.

Vorteilhaft enthält die Legierung 9,5 Gew.-% bis 12, 5 Gew.-%, insbesondere 10 Gew.-% bis 12 Gew.-% Mangan.

Vorteilhaft enthält die Legierung 1, 5 Gew.-% bis 3,5 Gew.-% , insbesondere 2 Gew.-% bis 3 Gew.-% Cobalt, Nickel oder deren Mischungen. Besonders vorteilhaft sind Legierungen, welche 1,5 Gew.-% bis 3,5 Gew.-%, insbesondere 1,75 Gew.-% bis 2,2 Gew.-% Nickel enthalten;
oder

Legierungen, welche 2,5 Gew.-% bis 4 Gew.-%, insbesondere 2, 7 Gew.-% bis 3, 2 Gew.-% Kobalt enthalten.

Optional enthält die Legierung bis zu 0,5 Gew.-% Silizium, vorteilhaft ist in diesem Fall, wenn die Legierung 0,1 Gew.-% bis 0,25 Gew.-% Silizium enthält. Weiter vorteilhaft ist es, wenn der Anteil an Silizium nur einen Teil des Kupfers der Legierung und nicht der anderen Legierungsbestandteile ersetzt.

In besonderen vorteilhaften Ausgestaltungen der Erfindung wird eine der folgenden Legierungszusammensetzungen verwendet. Der Kupfergehalt beträgt jeweils ad 100 Gew.-%.

| | Mn | Ni | Co | Si |
|---|---|---|---|---|
| 1 | 10 | - | 3 | - |
| 2 | 10 | - | 3 | 0,2 |
| 3 | 10 | 2 | | |
| 4 | 10 | 2 | | 0,2 |
| 5 | 10 | 1,5 | 1,5 | |
| 6 | 10 | 1,5 | 1,5 | 0,2 |
| 7 | 10 | 3 | | |
| 8 | 10 | 3 | | 0,2 |
| 9 | 10 | | 2 | |
| 10 | 10 | | 2 | 0,2 |
| 11 | 11 | - | 3 | - |
| 12 | 11 | | 3 | 0,2 |
| 13 | 11 | 2 | | |
| 14 | 11 | 2 | | 0,2 |
| 15 | 11 | 1,5 | 1,5 | |
| 16 | 11 | 1,5 | 1,5 | 0,2 |
| 17 | 11 | 3 | | |
| 18 | 11 | 3 | | 0,2 |
| 19 | 11 | | 2 | |
| 20 | 11 | | 2 | 0,2 |
| 21 | 12 | | 3 | |
| 22 | 12 | | 3 | 0,2 |
| 23 | 12 | 2 | | |
| 24 | 12 | 2 | | 0,2 |
| 25 | 12 | 1,5 | 1,5 | |
| 26 | 12 | 1,5 | 1,5 | 0,2 |
| 27 | 12 | 3 | | |
| 28 | 12 | 3 | | 0,2 |
| 29 | 12 | | 2 | |
| 30 | 12 | | 2 | 0,2 |

Die Legierung kann weiter unvermeidbare Verunreinigungen enthalten, wobei die Summe der Verunreinigungen vorteilhaft einer Menge von weniger als 0,35 Gew.-%, insbesondere weniger als 0,15 Gew.-% vorhanden sind. Bei diesen Verunreinigungen kann es sich u.A. um Aluminium, Wismut, Cadmium, Phosphor oder Blei handeln.

Vorteilhaft weist die Legierung sowohl bei 20°C als auch bei 100°C einen spezifischen elektrischen Widerstand von 43 µOhm * cm mit einer Toleranz von +- 10%, insbesondere +-5% auf (spezifischer Volumenwiderstand nach DIN IEC 468). Die hohe Reinheit und ein sehr homogener Draht, erkennbar an den geringen Toleranzen für den spezifischen elektrischen Widerstand, verringern das Spritzen der Legierung beim Löten und die Oxidation der Oberfläche, so dass nicht nur eine metallisch glänzende Oberfläche der Legierung nach dem Löten beobachtet werden kann, sondern auch eine geringe Anzahl an Defekten, wie Einschlüssen von Verunreinigungen, Blasen, Haarrissen oder Seigerungen auftreten, welche die mechanische Belastbarkeit und Lebensdauer der Verbindung herabsetzen.

Die Legierung zeigt eine Scherfestigkeit von mehr als 200 MPa, insbesondere von 200 MPa bis 300 MPa, bevorzugt mehr als 300 MPa, bestimmt nach DIN EN 12797. Die Zeitstandsfestigkeit der Legierung beträgt bei 300°C mindestens 60% der Zugfestigkeit bei 20°C bei einer Versuchsdauer von 1000 Stunden.

Die Abgasanlage kann gemäß der Erfindung im Prinzip nach jedem bekannten und geeigneten Verfahren gelötet werden, vorteilhaft wird jedoch durch Widerstandslöten, Laserlöten, Lichtbogenlöten oder Induktionslöten gelötet.

Gemäß der Erfindung ist mindestens eines der Bauteile der Abgasanlage ein Rohr, welches gelötet wird. Im Sinne der Erfindung werden auch andere abgasführende oder flüssigkeitsführende Teile unter dem Oberbegriff Rohr zusammengefasst, wie z.B. Metallschlauch oder Rohrbündelwärmetauscher. Beispielsweise kann ein zylindrisches Rohr als erstes Bauteil in ein an einem Ende -vorzugsweise parallel- aufgeweitetes Rohr als zweites Bauteil eingeführt und diese Steckverbindung anschließend gelötet werden. Dazu kann z.B. ein Ring aus der Legierung mit einem entsprechenden Innendurchmesser auf das erste Bauteil so aufgeschoben werden, dass dieser Ring (Lotring) auf dem Rand des zweiten Bauteils aufsitzt, oder eine Paste der Legierung aufgebracht werden. Dann wird zum Löten erwärmt, wobei die Legierung am besten nicht direkt erwärmt wird, sondern die Erhitzung auf die Schmelztemperatur an der Stelle stattfindet, an welcher später die Lötverbindung liegen soll. Da es sich bei den Bauteilen der Abgasanlage um Metalle handelt, wie Chromstahl, Nickelstahl, Edelstahl, nichtrostender Stahl, V2A-Stahl und deren Kombinationen, sind diese gute Wärmeleiter, wodurch die Legierung dann indirekt erhitzt, geschmolzen und vorteilhaft durch Kapillarkräfte in die Spalte zwischen den Bauteilen gezogen wird.

Dieser Vorgang kann sehr schnell ablaufen und unter optimierten Bedingungen in 10 Sekunden abgeschlossen sein.

Als Material für die Bauteile sind insbesondere alle Stähle geeignet, welche im Merkblatt 834 der Informationsstelle Edelstahl Rosfrei (ISER), Düsseldorf, und den darin erwähnten Dokumenten aufgeführt sind.

Die Erfindung betrifft daher auch ein Verfahren zum Verbinden von Bauteilen einer Abgasanlage mit den Schritten
- Bereitstellen eines ersten Bauteils;
- Bereitstellen eines zweiten Bauteils;
- Versehen von mindestens einem Bauteil mit einer Lötlegierung;
- Erwärmen der Lotstelle auf eine Temperatur, welche oberhalb der Liquidustemperatur der Lötlegierung, aber unterhalb der Solidustemperatur des ersten und zweiten Bauteils liegt;
- Überführen der geschmolzenen Lötlegierung in eine Kontaktzone, so dass das erste und das zweite Bauteil Kontakt mit der geschmolzenen Lötlegierung haben;
- Optional eine Wärmebehandlung der Lötstelle;
- Abkühlen der Lötstelle, wobei
die Lötlegierung eine Legierung der folgenden Zusammensetzung ist:
- 84 Gew.-% bis 88 Gew.-% Kupfer;
- 8,5 Gew.-% bis 13,5 Gew.-% Mangan;
- 1,5 Gew.-% bis 4 Gew.-% eines Übergangsmetalles ausgewählt aus der Gruppe bestehend aus Cobalt, Nickel und deren Mischungen;
- 0 Gew.-% bis 0,5 Gew.-% Silizium,
wobei sich die Summe der Legierungsbestandteile zu 100 Gew.-% ergänzen, sowie unvermeidbaren Verunreinigungen.

Die Verfahrensschritte des Versehens von mindestens einem Bauteil mit einer Lötlegierung und dem Erwärmen der Lotstelle auf eine Temperatur, welche oberhalb der Liquidustemperatur der Lötlegierung, aber unterhalb der Solidustemperatur des ersten und zweiten Bauteils liegt, können sequentiell oder simultan durchgeführt werden. So kann einerseits zunächst Lötlegierung als z.B. Paste oder in Form eines Lotrings aufgebracht werden, so dass die Bauteile gefügt und dann erwärmt werden. Andererseits können die Bauteile aber auch ohne vorherige Lotapplikation gefügt und erwärmt werden und das Lot erst während oder unmittelbar nach dem Erwärmen aufgebracht werden, wodurch das Lot sofort schmilzt und in die Kontaktzone überführt wird, so dass das erste und das zweite Bauteil Kontakt mit der geschmolzenen Lötlegierung haben. Die Liquidustemperatur der Legierung liegt im Allgemeinen zwischen 950°C und 1050°C. Die Legierung kann beispielsweise in Form von Draht, Band, einer Paste, auch in Form eines Rings, eingesetzt werden Um die vorteilhafte Überführung der geschmolzenen Legierung zwischen die durch Löten zu verbindenden Bauteile zu bewirken, liegt zwischen diesen Bauteilen eine umlaufende Spaltweite von 0,05 mm bis 0,2 mm, meist 0,1 bis 0,2 mm vor. Das Verfahren kann auch ohne einen definierten Spalt durchgeführt werden, wodurch dann jedoch keine genau definierten Kapillarkräfte auftreten.

Insbesondere bei martensitischen Stählen kann eine anschließende Wärmebehandlung der Lötstelle vorteilhaft sein.

Es liegt auf der Hand, dass die Solidustemperatur des Werkstoffs der Bauteile der Abgasanlage größer sein muß als der Schmelztemperaturbereich der Legierung. Auf diese Weise können auch Bauteile von Abgasanlagen mit niedrigen Wanddicken von unter 2 mm verbunden werden, wobei die Bauteile der Abgasanlagen Wanddicken von kleiner als 1,6 mm, insbesondere kleiner als 1 mm aufweisen. Bei derart dünnen Bauteilen ist es vorteilhaft, die Bauteile überlappend zu fügen und nicht wie beim Schweißen stumpf aneinander zu fügen.

Die Lötung kann unter Verwendung eines Flußmittels durchgeführt werden. Hierzu sind Hochtemperaturflussmittel nach DIN EN 1045, Typ FH20 oder FH21 einzusetzen. Für die höher legierten Stähle, wie sie in Abgassystemen zum Einsatz kommen, sind bevorzugt kommerziell erhältliche Flussmittel "BrazeTec s", "BrazeTec spezial s" oder vergleichbare Flussmittel gut geeignet. Alternativ kann auch unter Schutzgas gearbeitet werden. Hierbei kann entweder unter einer reduzierenden Atmosphäre wie zum Beispiel Wasserstoff oder Wasserstoff/Stickstoff bzw. Wasserstoff/Argon gearbeitet werden. Alternativ kann auch Inertgas wie Stickstoff oder Argon verwendet werden, wobei in diesem Fall meist höherer Temperaturen erforderlich sind.

Die Erfindung betrifft außerdem Abgasanlagen mit einem ersten Bauteil und einem zweiten Bauteil, dadurch gekennzeichnet, dass zwischen den beiden Bauteilen eine Lötstelle vorhanden ist, die aus einer Legierung der folgenden Zusammensetzung besteht:
- 84 Gew.-% bis 88 Gew.-% Kupfer;
- 8,5 Gew.-% bis 13,5 Gew.-% Mangan;
- 1,5 Gew.-% bis 4 Gew.-% eines Übergangsmetalles ausgewählt aus der Gruppe bestehend aus Cobalt, Nickel und deren Mischungen;
- 0 Gew.-% bis 2 Gew.-% Silizium, wobei sich die Summe der Legierungsbestandteile zu 100 Gew.-% ergänzen sowie unvermeidbaren Verunreinigungen.

Die Verwendung der Legierung und das Verfahren zum Verbinden von Bauteilen einer Abgasanlage eignet sich insbesondere zum Einsatz bei Abgasanlagen von Kraftfahrzeugen.

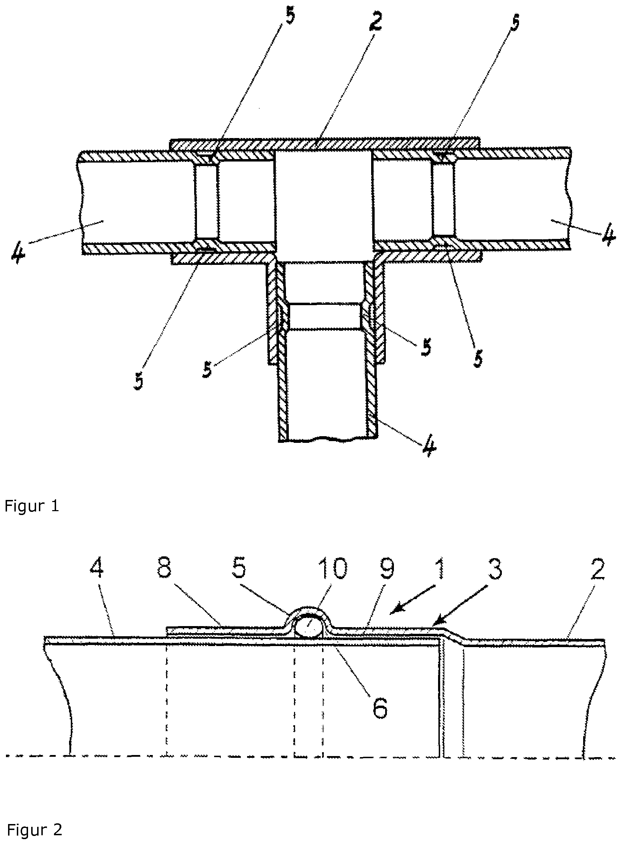

In Figur 1 ist eine gelötete Rohrverbindung einer Abgasanlage dargestellt, die gemäß der Erfindung gelötet werden kann. Die Rohre 4 sind Abschnitte eines als durchgehender Rohrstrang ausgebildeten Rohres. An den Trennstellen der Abschnitte ist ein äußeres Rohr 2 in Form eines T-Stücks vorgesehen, dessen Ansatzstutzen einen rechten Winkel bildet. Die Ansätze der Rohre 4 sind mit umlaufenden Sicken 5 versehen, die in Figur 1 die Form einer eckigen Sicke aufweisen, wobei aber auch runde Sicken verwendet werden können. In die Sicke kann ein Ring aus Lotdraht oder Lotband eingelegt oder eine Lötpaste appliziert werden. Es ist auch möglich, rechteckige oder runde Vertiefungen vorzusehen, welche an einer Stelle des jeweiligen Umfanges liegen, wobei das Lot z.B. als geformtes Plättchen eingelegt oder Lötpaste appliziert wird.

Figur 2 zeigt eine Verbindung 1 mit einem äußeren Rohr 2 und einem Rohr 4, das in das Aussenrohrs 2 einschiebbar ist. Das Rohr 4 weist dabei zumindest an dem in das äußere Rohr einschiebbaren Teil einen geringfügig kleineren Durchmesser auf als der Durchmesser des äußeren Rohres 2. Das äußere Rohr 2 ist mit einer rund um seinen Umfang verlaufenden, nach aussen vorstehenden runden Sicke 5 versehen, die an der Innenfläche des parallel aufgeweiteten Abschnitts 3 eine umlaufende Nut 6 bildet. Die Verbindung 1 ist mit einem in die Nut 6 eingelegten Lötring 10 versehen. Mittels dieses Lötrings 10 und Wärmebehandlung an der gewünschten Stelle ist unter Ausnutzung der Kapillarkräfte im Spalt (8, 9) die Muffenverbindung 1 verlötbar.

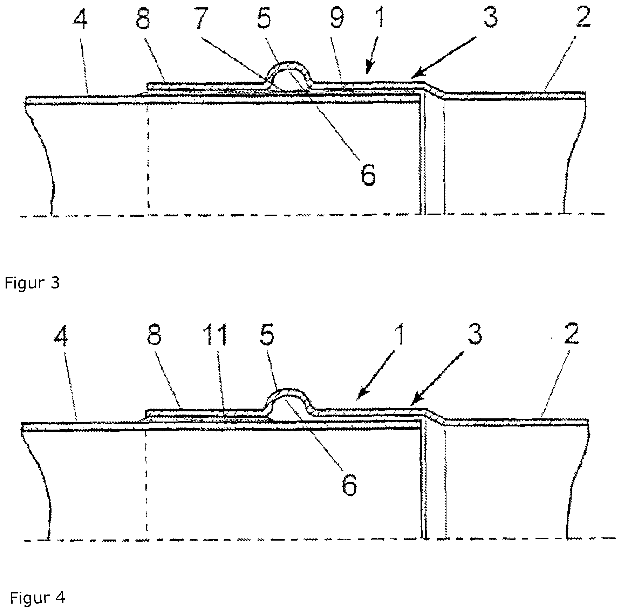

In Figur 3 ist diese Verbindung der Rohre 2 und 4 nach dem Löten dargestellt. Dabei sind die Innenfläche des äußeren Rohrs 2 und die Aussenfläche des eingeschobenen Rohrs 4 mit dem Lot 7 benetzt und miteinander verbunden, und zwar im Spalt (8, 9) beiderseitig der Nut 6.

In Figur 4 ist die Verbindung 1 durch herkömmliches Löten verbunden. Die von aussen eingebrachte Lotschicht 11 befindet sich im Spalt 8, im Bereich zwischen dem Rohrende des äußeren Rohrs 2 und der Nut 6. In diesem Bereich des Spalts ist von außen eingebrachtes Lot ebenfalls unter Ausnutzung der Kapillarkraft verteilbar.

### Bezugszeichenliste

1 Verbindung
2 äußeres Rohr
3 parallel aufgeweiteter Abschnitt
4 eingeschobenes Rohr
5 Sicke
6 Nut
7 Lotschicht
8 Spalt
9 Spalt
10 Lötring
11 Lotschicht

## Patentansprüche

1. Verwendung einer Legierung bestehend aus
- 84 Gew.-% bis 88 Gew.-% Kupfer;
- 8,5 Gew.-% bis 13,5 Gew.-% Mangan;
- 1,5 Gew.-% bis 4 Gew.-% eines Übergangsmetalles ausgewählt aus der Gruppe bestehend aus Cobalt, Nickel und deren Mischungen;
- 0 Gew.-% bis 0,5 Gew.-% Silizium, wobei sich die Summe der Legierungsbestandteile zu 100 Gew.-% ergänzen sowie unvermeidbaren Verunreinigungen zum Löten von Bauteilen von Abgasanlagen.

2. Verwendung nach Anspruch 1, wobei das Löten durch Widerstandslöten, Laserlöten, Lichtbogenlöten oder Induktionslöten erfolgt.

3. Verwendung einer Legierung nach Anspruch 1 oder 2, wobei die Summe der Verunreinigungen in einer Menge von weniger als 0,15 Gew.-% vorhanden sind.

4. Verwendung einer Legierung nach einem der vorstehenden Ansprüche, wobei die Legierung eine Scherfestigkeit von mehr als 200 MPa, insbesondere mehr als 300 MPa, bestimmt nach DIN EN 12797, aufweist.

5. Verwendung einer Legierung nach einem der vorstehenden Ansprüche, wobei die Zeitstandsfestigkeit der Legierung bei einer Versuchsdauer von 1000 Stunden bei 300°C mindestens 60% der Zugfestigkeit bei 20°C beträgt.

6. Verwendung einer Legierung nach einem der vorstehenden Ansprüche, wobei die Liquidustemperatur der Legierung zwischen 950°C und 1050°C beträgt.

7. Verwendung einer Legierung nach einem der vorstehenden Ansprüche, wobei die Legierung bei 20°C und bei 100°C einen spezifischen elektrischen Widerstand von 43 µOhm * cm mit einer Toleranz von +- 10%, insbesondere +-5% aufweist.

8. Verwendung einer Legierung nach einem der vorstehenden Ansprüche, wobei die Bauteile der Abgasanlagen Wanddicken von kleiner als 1,6 mm, insbesondere kleiner als 1 mm aufweisen.

9. Abgasanlage mit einem ersten Bauteil und einem zweiten Bauteil, **dadurch gekennzeichnet, dass** zwischen den beiden Bauteilen eine Lötstelle vorhanden ist, die aus einer Legierung der folgenden Zusammensetzung besteht:
- 84 Gew.-% bis 88 Gew.-% Kupfer;
- 8,5 Gew.-% bis 13,5 Gew.-% Mangan;
- 1,5 Gew.-% bis 4 Gew.-% eines Übergangsmetalles ausgewählt aus der Gruppe bestehend aus Cobalt, Nickel und deren Mischungen;
- 0 Gew.-% bis 0,5 Gew.-% Silizium, wobei sich die Summe der Legierungsbestandteile zu 100 Gew.-% ergänzen sowie unvermeidbaren Verunreinigungen.

10. Verfahren zum Verbinden von Bauteilen einer Abgasanlage mit den Schritten
- Bereitstellen eines ersten Bauteils;
- Bereitstellen eines zweiten Bauteils;
- Versehen von mindestens einem Bauteil mit einer Lötlegierung;
- Erwärmen der Lotstelle auf eine Temperatur, welche oberhalb der Liquidustemperatur der Lötlegierung, aber unterhalb der Solidustemperatur des ersten und zweiten Bauteils liegt, wobei
die Lötlegierung eine Legierung der folgenden Zusammensetzung ist:
- 84 Gew.-% bis 88 Gew.-% Kupfer;
- 8,5 Gew.-% bis 13,5 Gew.-% Mangan;
- 1,5 Gew.-% bis 4 Gew.-% eines Übergangsmetalles ausgewählt aus der Gruppe bestehend aus Cobalt, Nickel und deren Mischungen;
- 0 Gew.-% bis 0,5 Gew.-% Silizium,
wobei sich die Summe der Legierungsbestandteile zu 100 Gew.-% ergänzen, sowie unvermeidbaren Verunreinigungen.

## Claims

1. Use of an alloy consisting of
- 84 wt% to 88 wt% copper;
- 8.5 wt% to 13.5 wt% manganese;
- 1.5 wt% to 4 wt% of a transition metal selected from the group consisting of cobalt, nickel, and mixtures thereof;
- 0 wt% to 0.5 wt% silicon, wherein the total of the alloy constituents makes up 100 wt%, as well as unavoidable impurities for soldering the components of exhaust systems.

2. Use according to Claim 1, wherein the soldering takes the form of resistive soldering, laser soldering, arc soldering, or induction soldering.

3. Use of an alloy according to Claim 1 or 2, wherein the total of the impurities is present in a quantity of less than 0.15 wt%.

4. Use of an alloy according to one of the preceding claims, wherein the alloy has a shear strength of more than 200 MPa - in particular, more than 300 MPa - determined according to DIN EN 12797.

5. Use of an alloy according to one of the preceding claims, wherein the alloy's creep strength for a test time of 1000 hours at 300 °C is at least 60% of the tensile strength at 20 °C.

6. Use of an alloy according to one of the preceding claims, wherein the liquidus temperature of the alloy is between 950 °C and 1050 °C.

7. Use of an alloy according to one of the preceding claims, wherein the alloy at 20 °C and at 100 °C has a specific electrical resistance of 43 µOhm * cm with a tolerance of ±10% - in particular, ±5%.

8. Use of an alloy according to one of the preceding claims, wherein the components of the exhaust systems have wall thicknesses of less than 1.6 mm - in particular, less than 1 mm.

9. Exhaust system with a first component and a second component, **characterized in that** a soldering point consisting of an alloy of the following composition is present between the two components:
- 84 wt% to 88 wt% copper;
- 8.5 wt% to 13.5 wt% manganese;
- 1.5 wt% to 4 wt% of a transition metal selected from the group consisting of cobalt, nickel, and mixtures thereof;
- 0 wt% to 0.5 wt% silicon, wherein the total of the alloy constituents makes up 100 wt%, as well as unavoidable impurities.

10. Method for connecting components of an exhaust gas system, with the steps of
- Providing a first component;
- Providing a second component;
- Providing at least one component with a solder alloy;
- Heating the soldering point to a temperature which is above the liquidus temperature of the solder alloy, but below the solidus temperature of the first and second components, wherein
the solder alloy is an alloy of the following composition:
- 84 wt% to 88 wt% copper;
- 8.5 wt% to 13.5 wt% manganese;
- 1.5 wt% to 4 wt% of a transition metal selected from the group consisting of cobalt, nickel, and mixtures thereof;
- 0 wt% to 0.5 wt% silicon,
wherein the total of the alloy constituents makes up 100 wt%, as well as unavoidable impurities.

## Revendications

1. Utilisation d'un alliage constitué de
- 84 % en poids à 88 % en poids de cuivre ;
- 8,5 % en poids à 13,5 % en poids de manganèse ;
- 1,5 % en poids à 4 % en poids d'un métal de transition choisi dans le groupe constitué de cobalt, nickel et leurs mélanges ;
- 0 % en poids à 0,5 % en poids de silicium, la somme des composants d'alliage se complétant à 100 % en poids, ainsi que les impuretés inévitables pour le brasage de composants d'installations de gaz d'échappement.

2. Utilisation selon la revendication 1, le brasage s'effectuant par brasage par résistance, soudage par laser, soudage à l'arc ou brasage par induction.

3. Utilisation d'un alliage selon la revendication 1 ou 2, la somme des impuretés étant présente en une quantité inférieure à 0,15 % en poids.

4. Utilisation d'un alliage selon une des revendications précédentes, l'alliage présentant une résistance au cisaillement supérieure à 200 MPa, notamment supérieure à 300 MPa, déterminée selon la norme DIN EN 12797.

5. Utilisation d'un alliage selon une des revendications précédentes, la résistance au fluage de l'alliage pendant une durée d'essai de 1000 heures à 300 °C étant d'au moins 60 % de la résistance à la traction à 20 °C.

6. Utilisation d'un alliage selon une des revendications précédentes, la température de liquidus de l'alliage étant comprise entre 950 °C et 1050 °C.

7. Utilisation d'un alliage selon une des revendications précédentes, l'alliage présentant à 20 °C et à 100 °C une résistance électrique spécifique de 43 µOhm * cm avec une tolérance de +- 10 %, notamment +-5 %.

8. Utilisation d'un alliage selon une des revendications précédentes, les composants de l'installation de gaz d'échappement présentant des épaisseurs de paroi inférieures à 1,6 mm, notamment inférieures à 1 mm.

9. Installation de gaz d'échappement ayant un premier composant et un second composant, **caractérisée en ce que,** entre les deux composants, se trouve un point de brasage qui est constitué d'un alliage ayant la composition suivante :
- 84 % en poids à 88 % en poids de cuivre ;
- 8,5 % en poids à 13,5 % en poids de manganèse ;
- 1,5 % en poids à 4 % en poids d'un métal de transition choisi dans le groupe constitué de cobalt, nickel et leurs mélanges ;
- 0 % en poids à 0,5 % en poids de silicium, la somme des composants d'alliage se complétant à 100 % en poids, ainsi que les impuretés inévitables.

10. Procédé de liaison de composants d'une installation de gaz d'échappement comprenant les étapes consistant à
fournir un premier composant ;
- fournir un second composant ;
- pourvoir au moins un composant d'un alliage de brasage ;
- chauffer le point de brasage à une température supérieure à la température de liquidus de l'alliage de brasage mais inférieure à la température de solidus des premier et second composants,
l'alliage de brasage étant un alliage ayant la composition suivante :
- 84 % en poids à 88 % en poids de cuivre ;
- 8,5 % en poids à 13,5 % en poids de manganèse ;
- 1,5 % en poids à 4 % en poids d'un métal de transition choisi dans le groupe constitué de cobalt, nickel et leurs mélanges ;
- 0 % en poids à 0,5 % en poids de silicium,
la somme des composants d'alliage se complétant à 100 % en poids, ainsi que les impuretés inévitables.
